(19) Europäisches Patentamt
European Patent Office
Office européen des brevets

(11) Numéro de publication: **0 191 259 B1**

(12) **FASCICULE DE BREVET EUROPEEN**

(45) Date de publication du fascicule du brevet: **24.05.89**

(21) Numéro de dépôt: **85402618.4**

(22) Date de dépôt: **24.12.85**

(51) Int. Cl.⁴: **C 07 F 7/04**, C 07 F 7/08, C 07 F 7/12, C 07 F 7/07, C 07 F 7/18

(54) **Nouveaux complexes de silicium hexacoordinés, leur procédé de préparation et leur application.**

(30) Priorité: **27.12.84 FR 8419886**

(43) Date de publication de la demande
**20.08.86 Bulletin 86/34**

(45) Mention de la délivrance du brevet:
**24.05.89 Bulletin 89/21**

(84) Etats contractants désignés:
**AT BE CH DE GB IT LI LU NL SE**

(56) Documents cités:
**EP-A- 0 188 967**
**FR-A- 1 427 512**

**ZEITSCHRIFT FÜR ANORGANISCHE UND ALLGEMEINE CHEMIE, vol. 196, 1931, pages 160-164; A. ROSENHEIM et al.: "Über innerkomplexe Brenzcatechinate vierwertiger Elemente"**
**Anorganic Chemistry, 12, no. 2, pages 497, 498 (1973)**

(73) Titulaire: **CENTRE NATIONAL DE LA RECHERCHE SCIENTIFIQUE (CNRS), 15, Quai Anatole France, F-75007 Paris (FR)**

(72) Inventeur: **Corriu, Robert, 246, rue de l'Espérou, F-34100 Montpellier (FR)**
Inventeur: **Cerveau, Geneviève, Clos St Joseph - C 749 Avenue du Pic Saint Loup, F-34100 Montpellier (FR)**
Inventeur: **Chuit, Claude, Route de Saunière, F-30250 Junas (FR)**
Inventeur: **Reye, Catherine, Résidence Le Bussy d'Amboise 160 Rue d'Alco, F-34000 Montpellier (FR)**

(74) Mandataire: **Warcoin, Jacques et al, Cabinet Régimbeau 26, avenue Kléber, F-75116 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 191 259 B1

## Description

La présente invention concerne de nouveaux complexes du silicium hexacoordinés, leur procédé de préparation et leur application.

Les complexes de silicium hexacoordinés selon l'invention répondent à la formule générale I:

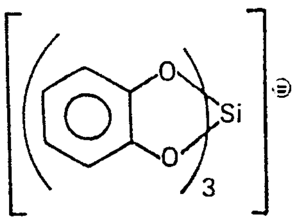

$(n+1)A^{(2-n)\oplus}$ (I)a

dans laquelle:

A représente un métal alcalin ou alcalino-terreux, à l'exception du magnésium, et

n= 0 ou 1.

Conformément à la présente invention, ces complexes peuvent être avantageusement préparés par réaction de silice ou de silicates minéraux ou organiques avec du pyrocatéchol, en présence d'un alcoolate de métal alcalin ou alcalino-terreux, notamment préparé in situ dans le milieu réactionnel.

A titre d'exemple de silicates minéraux de départ, on mentionnera l'hexafluorosilicate de calcium, et à titre d'exemple de silicates organiques, les silicates de formule $Si(OR)_4$ dans laquelle R représente un radical alcoyle contenant de 1 à 6 atomes de carbone. Ces silicates organiques peuvent être préparés selon des procédés classiques décrits par exemple dans «Chemistry and Technology of Silicones» (W. Noll).

A titre de base nécessaire pour la mise en œuvre du procédé ci-dessus, on utilisera avantageusement un alcoolate de métal alcalin ou alcalino-terreux, par exemple du méthylate de sodium, ce dernier pouvant notamment être préparé in situ dans le milieu réactionnel.

De façon générale, la réaction entre la silice ou les silicates et le pyrocatéchol est menée dans un milieu solvant, notamment un milieu alcoolique, tel que le méthanol, et sous une atmosphère inerte en particulier une atmosphère d'azote.

La présente invention se rapporte également à l'application des complexes de formule I à la préparation d'organosilanes qui sont des composés susceptibles de nombreuses applications industrielles.

Habituellement, les organosilanes sont préparés par chauffage du silicium élémentaire avec un halogénure d'alcoyle ou d'aryle en présence d'un catalyseur à base de cuivre. Une telle réaction présente l'inconvénient de conduire le plus souvent à des mélanges de divers produits. C'est ainsi que la réaction du silicium sur le chlorure de méthyle donne naissance à un mélange de méthylchlorosilanes conformément au schéma réactionnel suivant:

$$CH_3Cl + Si \xrightarrow[300\,°C]{Cu(10\%)} SiCl_4 + CH_3SiHCl_2 + CH_3SiCl_3 + (CH_3)_2SiCl_2$$

En outre, un tel mode de préparation ne permet pas l'obtention directe d'organosilanes mixtes comportant des groupements organiques différents.

L'état de la technique le plus proche connu peut être illustré par les deux références bibliographiques suivantes «Zeitschrift für anorganische und allgemeine Chemie, Band 196» pages 160 et suivantes (1931) et «Inorganic Chemistry», vol. 12, n° 2, pages 497–498 (1973). La première référence cite des complexes de silicium hexacoordinés hydratés et en particulier le complexe de potassium. Ces complexes hydratés ne peuvent donc pas être mis à réagir avec un dérivé organométallique, compte tenu de la présente des molécules d'eau d'hydratation. D'ailleurs ce document antérieur ne mentionne pas la moindre application pour ces complexes. La seconde référence vise la préparation de tris(benzènediolato-1,2)silicate de magnésium à partir d'un complexe correspondant hydraté. Un tel mode de préparation par déshydratation est long et difficile à mettre en œuvre. Ce second document n'enseigne pas non plus la moindre application de ce type de complexe.

La présente invention permet précisément d'écarter les inconvénients précités, puisqu'elle propose un mode de préparation d'organosilanes, qui ne nécessite plus le passage par le silicium élémentaire et qui permet en outre d'obtenir, avec d'excellents rendements, les organosilanes mixtes les plus divers.

Conformément à la présente invention, le procédé de préparation d'organosilanes de formule générale II

$R_3Si–R'$ (II)

dans laquelle:

R désigne un radical alcoyle, alcényle, alcynyle, phényle, naphtyle, phénylalcoyle, naphtylalcoyle, phénylalcényle, naphtylalcényle, phénylalcynyle, naphtylalcynyle, alcoylphényle ou alcoylnaphtyle, dans lesquels les fragments aliphatiques sont linéaires ou ramifiés et contiennent de 1 à 20 atomes de carbone, ou encore un radical Si $R_3''$ où R'' désigne un radical R, et

R' désigne un atome d'hydrogène ou d'halogène, ou encore un radical R, est caractérisé en ce que l'on fait réagir un dérivé organométallique avec un complexe de silicium hexacoordiné de formule générale I

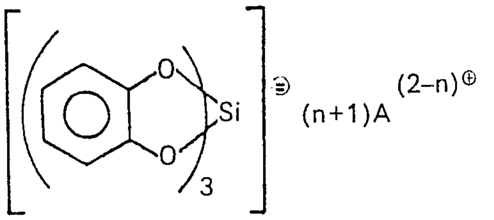

(I)

dans laquelle:

A représente un métal alcalin ou alcalino-terreux, et

n = 0 ou 1.

Les organosilanes de formule II obtenus selon l'invention sont connus pour la plupart. Ils sont essentiellement utilisés dans l'industrie des silicones comme agents réticulants et additifs à des compositions catalytiques, ou encore dans l'industrie pharmaceutique. Jusqu'à présent, ils étaient préparés à partir de produits de départ résultant de la synthèse directe précédemment évoquées, par des procédés nécessitant de nombreuses étapes réactionnelles.

En revanche, la présente invention offre une nouvelle voie de synthèse d'organosilanes, ne nécessitant plus que deux étapes réactionnelles, et permettant d'obtenir avec d'excellents rendements des produits très purs. Ce mode de préparation permet en outre d'atteindre rapidement les organosilanes mixtes les plus divers.

Les dérivés organométalliques utilisés dans le cadre du procédé, objet de la présente invention, sont des composés présentant au moins un groupement organique relié à un atome de métal par une liaison directe carbone-métal.

Les groupements organiques présents dans les dérivés organométalliques sont principalement constitués par des radicaux hydrocarbonés choisis parmi les radicaux alcoyle, alcényle, alcynyle, aryle, aralcoyle, aralcényle, aralcynyle, ou alcoylaryle dans lesquels les fragments aliphatiques sont linéaires, ramifiés ou cycliques et contiennent de 1 à 20 atomes de carbone.

Dans l'ensemble de la présente description, les radicaux aryle et les fragments aromatiques des radicaux aralcoyle, aralcényle, aralcynyle et alcoylaryle désignent des radicaux phényle et naphtyle.

Parmi les métaux dans de tels dérivés organométalliques on citera à titre d'exemple, principalement les métaux alcalins, alcalino-terreux, les métaux du groupe III tel que l'aluminium, et les métaux de transition, tel que le zinc.

A titre d'exemples particuliers, on mentionnera les organo-alcalins de formule générale III:

$$R\text{–}Alc \qquad (III)$$

dans laquelle R a la signification donnée précédemment et Alc désigne un métal alcalin, tels que le méthylsodium et le méthyllithium, l'éthylsodium et l'éthyllithium, l'isopropylsodium et l'isopropyllithium, le n-butylsodium et le n-butyllithium, le vinylsodium et le vinyllithium, l'allylsodium et l'allyllithium, l'éthynylsodium et l'éthynyllithium, le propargylsodium et le propargyllithium, le phénylsodium et le phényllithium, le benzylsodium et le benzyllithium; les halogénures d'organomagnésium de formule générale IV:

$$R\text{–}Mg\text{–}X \qquad (IV)$$

dans laquelle R a la signification donnée précédemment et X désigne un atome d'halogène, tels que le bromure de méthylmagnésium, le bromure d'éthylmagnésium, le bromure d'isopropylmagnésium, le bromure de tertiobutylmagnésium, le bromure de vinylmagnésium, le bromure d'allylmagnésium, le bromure d'hexynylmagnésium, le bromure de phénylmagnésium, le bromure de benzylmagnésium, le bromure de phényléthylmagnésium; les organoziniciques de formule générale V:

$$R_2Zn \qquad (V)$$

dans laquelle R a la signification donnée précédemment, tels que le diéthylzinc;

les organobimagnésiens de formule générale VI:

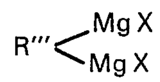

(VI)

dans laquelle R''' désigne un radical alcoylène ou alcénylène contenant 3 à 5 atomes de carbone, et X désigne un atome d'halogène, tels que le dichlorure de pentyldimagnésium-1,5, le dibromure de pentyldimagnésium-1,5, le dichlorure de buténýl-2(Z)dimagnésium-1,4.

Enfin, d'autres types d'organobimétalliques, tels que

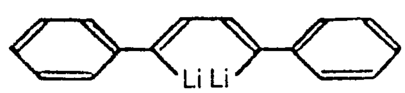

peuvent également être utilisés.

Selon une autre caractéristique de la présente invention, la réaction entre le dérivé organométallique et le complexe de silicium hexacoordiné de formule générale I est conduite par chauffage au reflux, en milieu solvant anhydre et sous atmosphère inerte, par exemple sous atmosphère d'azote. Le milieu solvant inerte utilisé est avantageusement choisi parmi les éthers aliphatiques, tels que l'éther éthylique, le dioxanne et le tétrahydrofuranne, ou encore parmi les hydrocarbures, tels que par exemplele cyclohexane.

Lorsque l'on fait réagir le complexe de silicium hexacoordiné de formule générale I avec trois équivalents de dérivé organométallique, on obtient après hydrolyse un intermédiaire de synthèse répondant à la formule générale

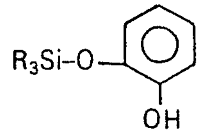

qui sera lui-même susceptible de réagir soit avec un excès du dérivé organométallique de départ pour conduire à l'organosilane de formule $R_4$ Si, soit avec un agent réducteur, en particulier un hydrure minéral tel que l'aluminohydrure de lithium pour conduire à un monohydrogénoorganosilane, soit avec un acide halogénhydrique tel que l'acide chlorhydrique pour donner un monochloroorganisolane, soit encore avec un second dérivé organométallique répondant à une des formules générales suivantes:

R–Alc, R–Mg–X, $R_2$ Zn ou $R_3$' Si–Li

où:

R et R' ont la signification donnée précédemment à propos du radical R,

Alc désigne un métal alcalin, et

X désigne un atome d'halogène, pour conduire à un organosilane mixte.

De façon avantageuse, on peut obtenir un monohydrogénoorganosilane par réaction de l'aluminohydrure de lithium sur (l'hydroxy-2-phénoxy)silane intermédiaire de formule

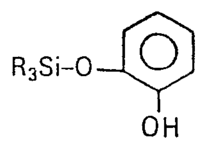

préalablement isolé du milieu réactionnel. En variante, l'agent réducteur peut être directement introduit dans le milieu réactionnel, après réaction complète de l'organométallique.

Conformément à une variante du procédé de préparation selon l'invention, la réaction entre le complexe de formule I et le dérivé organométallique, présent en excès dans le milieu réactionnel, est conduite en présence de dichlorure de bis(cyclopentadienyl)titane pour obtenir directement le monohydrogénoorganosilane correspondant.

On indiquera ci-après à titre d'illustration du procédé de l'invention, un certain nombre d'exemples de préparation d'organosilanes obtenus selon les diverses variantes du procédé en partant notamment des dérivés organométalliques de nature différente, ainsi que des exemples de préparation des complexes de départ.

Exemple 1
Préparation du tris(benzènediolato-1,2)silicate de sodium

Les préparations sont effectuées sous azote dans un tube de Schlenk avec des solvants dégazés pour éviter l'oxydation du catécholate de sodium.

a) à partir du silicate de méthyle

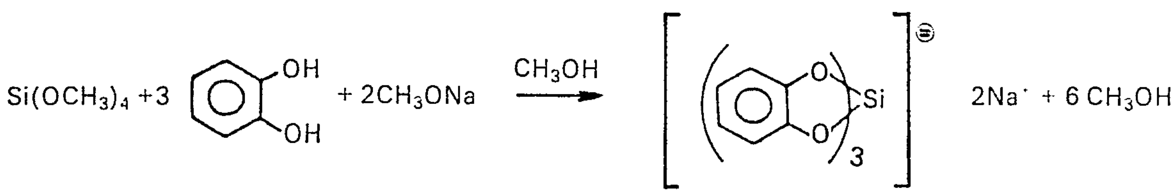


6,4 g (0,278 mole) de sodium sont dissous dans 80 ml de méthanol. On ajoute ensuite 22,5 g (0,148 mole) de silicate de méthyle dissous dans 20 ml de méthanol, puis 47,5 g (0,432 mole) de pyrocatéchol dissous dans 50 ml de méthanol. Durant l'introduction du pyrocatéchol, le mélange réactionnel devient laiteux, puis homogène. On chauffe pendant 1 h à 60 °C. Le méthanol est ensuite chassé sous vide et le complexe lavé à l'éther pour éliminer l'excès de silicate de méthyle et de pyrocatéchol. On filtre à l'air, lave le complexe 2 fois à l'éther. Le complexe est séché sous vide à 150 °C pendant 30 heures pour éliminer entièrement l'éther (l'éther est fortement adsorbé sur le complexe).

On obtient ainsi 54,5 g (0,137 mole, 98%) d'une poudre blanche amorphe stable à l'air qui ne fond pas à 300 °C. Ce complexe est soluble dans le THF, le méthanol et la pyridine et insoluble dans les autres solvants usuels.

Caractéristiques spectrales:
$^{13}C$ RMN ($CD_3OD$) δ = 151,3; 118,6;
(Référence TMS) 111,7 ppm
$^{29}Si$ RMN ($CD_3OD$) δ = −113 ppm.

b) à partir de la silice

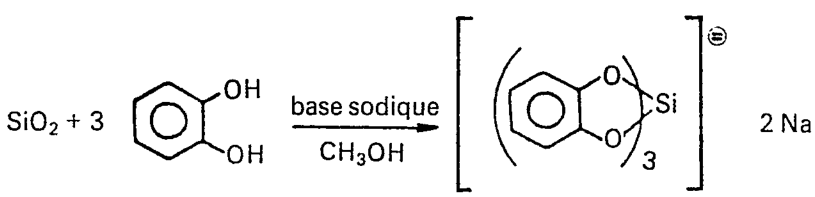


En opérant dans les mêmes conditions générales qu'à l'exemple 1a, mais en remplaçant le silicate de méthyle par de la silice ou par un gel de silice, on obtient, avec un rendement de 70%, le même complexe de coordination en chauffant le mélange réactionnel pendant 18 heures à 60 °C.

c) Préparation de tris(benzènediolato-1,2) silicate de calcium à partir de l'hexafluorosilicate de calcium

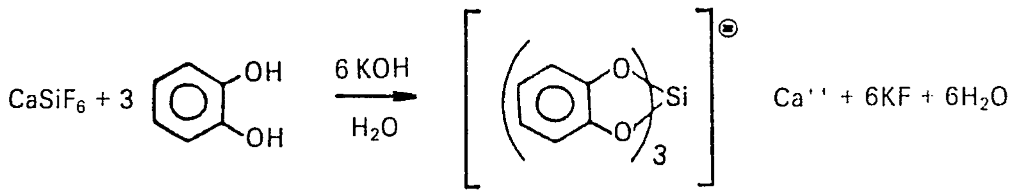


6,8 g (120 mmoles) de potasse mis dans un tube de Schlenk sont dissous dans 40 ml d'eau. On ajoute sous azole 3,7 g (20 mmole s) de $SiF_6Ca$ puis 6,6 g (60 mmoles) de catéchol et on chauffe à 70 °C pendant 15 heures. Après avoir chassé l'eau, on reprend le solide obtenu avec 2×100 ml de THF. Le mélange obtenu est filtré et le filtrat concentré sous vide. On obtient 4,2 g de complexe souillé de catéchol. Ce catéchol est éliminé par lavage à l'éther (2×50 ml). Le complexe insoluble dans l'éther est isolé par filtration, puis séché sous vide à 120 °C pendant 6 heures. On récupère 2,8 g (35%) de complexe calcique.

Exemple 2

Préparation du tris(benzènediolato-1,2)silicate de lithium

En opérant de la même manière qu'aux exemples 1a) et 1b) et en utilisant le méthylate de lithium, on obtient le complexe lithié correspondant. En partant du silicate de méthyle, le rendement de la réaction est quantitatif (95–100%).

Exemple 3

Préparation du tris(benzènediolato-1,2)silicate de magnésium

En opérant de la même manière qu'aux exemples 1a) et 1b) et en utilisant le méthylate de magnésium, on obtient le complexe magnésié correspondant. En partant du silicate de méthyle, le rendement de la réaction est quantitatif (95–100%).

Exemple 4

Préparation de dérivés de (hydroxy-2 phénoxy)-silane

a) Mode opératoire général

10 à 20 mmoles du complexe de silicium hexacoordiné de formule générale 1 sont mis en suspension dans 50 à 100 ml d'éther anhydre. 3 équivalents de dérivé organométallique sont ajoutés à la température ambiante, puis le mélange réactionnel est chauffé à reflux pendant 1 à 2 heures. Il est ensuite hydrolysé avec 50 ml d'une solution $H_2SO_4$ à 25%, puis le dérivé d'(hydroxy-2 phénoxy)silane est isolé. La séparation s'effectue comme suit. Le dérivé silicié est extrait trois fois à l'éther. La solution éthérée est lavée une fois avec 25 ml d'eau, deux fois avec 25 ml de solution de soude 2N, deux fois avec 25 ml d'eau, une fois avec une solution saturée de chlorure de sodium, et séchée sur sulfate de magnésium. Après évaporation du solvant, le dérivé silicié est purifié par distillation ou recristallisation. Il est caractérisé par les spectres IR, RMN et de masse.

b) Préparation du triéthyl(hydroxy-2 phénoxy)silane

En faisant réagir, dans les conditions ci-dessus, le tris(benzènediolato-1,2) silicate de sodium avec 3 équivalents de bromure d'éthylmagnésium, on obtient avec un rendement de 72% le triéthyl(hydroxy-2 phénoxy)silane de formule:

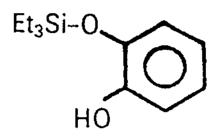

$Eb_1 = 120–123$ °C

c) Préparation du [tri(n-butyl)](hydroxy-2 phénoxy)-silane

En faisant réagir, dans les conditions ci-dessus, le tris(benzènediolato-1,2)silicate de sodium avec 3 équivalents de bromure de n-butylmagnésium, on obtient avec un rendement de 82% le [tri(n-butyl)](hydroxy-2 phénoxy)silane de formule:

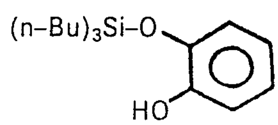

$Eb_{0.5} = 140–155$ °C

d) Préparation du triallyl(hydroxy-2 phénoxy)-silane

En faisant réagir, dans les conditions ci-dessus, le tris(benzènediolato-1,2)silicate de sodium avec 3 équivalents de bromure d'allymagnésium, on obtient avec un rendement de 43% le triallyl(hydroxy-2 phénoxy)silane de formule:

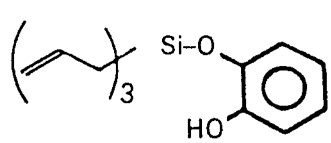

$Eb_{0.1} = 106–108$ °C

Exemple 5

Préparation de monohydrogénoorganosilanes

a) Mode opératoire général

Le mode opératoire est identique à celui décrit à l'exemple 4a) ci-dessus. Cependant, au lieu d'hydrolyser le mélange réactionnel, ce dernier est versé sur un excés (n g) de $LiAlH_4$ en suspension dans l'éther. Après 3 heures d'agitation à température ambiante, le mélange réactionnel est hydrolysé avec n ml d'eau, puis n ml de soude à 15%, puis 3.n ml d'eau. Le précipité formé est filtré et lavé à l'éther. Les filtrats éthérés sont lavés à l'eau et séchés sur sulfate de magnésium. Le solvant est évaporé et le résidu est distillé.

b) Préparation de tri(n-butyl)silane

En faisant réagir, dans les conditions ci-dessus, le tris(benzènediolato-1,2)silicate de sodium avec 3 équivalents de bromure de n-butylmagnésium, on obtient avec un rendement de 80% le tri(n-butyl)silane de formule:

$(n\text{-}Bu)_3\,Si\text{-}H$ $Eb_{20} = 108\text{–}115\ °C$

c) Préparation du triéthylsilane

En faisant réagir, dans les conditions ci-dessus, le tris(benzènediolato-1,2)silicate de sodium avec 3 équivalents de bromure d'éthylmagnésium, on obtient avec un rendement de 60% le triéthylsilane de formule:

$Et_3\,Si\text{-}H$ $Eb_{60} = 40\text{–}45\ °C$

d) Préparation du tri(isobutyl)silane

En faisant réagir, dans les conditions ci-dessus, le tris(benzènediolato-1,2)silicate de sodium avec 3 équivalents de bromure d'isobutylmagnésium, on obtient avec un rendement de 71% le tri(isobutyl)silane de formule:

$iBu_3\,Si\text{-}H$ $Eb_{15} = 115\text{–}120\ °C$

e) Préparation du tri(isopropyl)silane

En faisant réagir, dans les conditions ci-dessus, le tris(benzènediolato-1,2)silicate de sodium avec 3 équivalents de bromure d'isopropylmagnésium, on obtient avec un rendement de 58% le tris(isopropyl)silane de formule:

$iPr_3Si\text{-}H$ $Eb_{30} = 77\text{–}80\ °C$

f) Préparation du tribenzylsilane

En faisant réagir, dans les conditions ci-dessus, le tris(benzénediolato-1,2)silicate de sodium avec 3 équivalents de bromure de benzylmagnésium, on obtient avec un rendement de 73% le tribenzylsilane de formule:

( 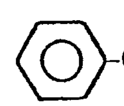 $-CH_2)_3Si\text{-}H$ P.F. = 90–91 °C

Exemple 6

Préparation de chlorosilanes

a) Mode opératoire général

Le mode opératoire est identique à celui décrit précédemment à l'exemple 4a). Toutefois, au lieu d'hydrolyser le mélange réactionnel, ce dernier est traité par une solution d'HCl dans l'éther anhydre (excès d'HCl). Aprés évaporation du solvant le produit est distillé.

b) Préparation du triéthylchlorosilane

En faisant réagir, dans les conditions ci-dessus, le tris(benzènediolato-1,2)silicante de sodium avec 3 équivalents de bromure d'éthylmagnésium, on obtient avec un rendement de 70% le triéthylchlorosilane de formule:

$Et_3\,Si\text{-}Cl$ $Eb_{95} = 86\ °C$

Exemple 7

Préparation d'organosilanes mixtes de formule

$$R_3\,Si\text{-}R'$$

a) Mode opératoire général

Le mode opératoire est identique à celui décrit précédemment à l'exemple 4a). Cependant, au lieu d'hydrolyser le mélange réactionnel, ce dernier est traité par 1 équivalent d'organométallique réactif, et ensuite chauffé pendant 3 heures.

Le mélange est ensuite hydrolysé par 50 ml d'$H_2SO_4$ 25%. Le composé silicié est isolé comme précédemment indiqué à l'exemple 4a).

b) Préparation de triéthylallylsilane

En faisant réagir, dans les conditions ci-dessus, le tris(benzènediolato-1,2)silicate de sodium avec 3 équivalents de bromure d'éthylmagnésium et 1 équivalent de bromure d'allylmagnésium, on obtient avec un rendement de 70% le triéthylallylsilane de formule:

$Et_3$ Si 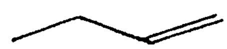 $Eb_{35} = 75\text{–}80\ °C$

c) Préparation du triéthyl(phényléthynyl)silane

En faisant réagir, dans les conditions ci-dessus, le tris(benzènediolato-1,2)silicate de sodium avec 3 équivalents de bromure d'éthylmagnésium et 1 équivalent de bromure de phényléthynylmagnésium, on obtient avec un rendement de 67% le triéthyl(phényléthynyl)silane de formule:

$Et_3Si\text{-}C{\equiv}C\text{-}$ 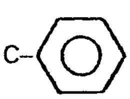 $Eb_{25} = 150\ °C$

d) Préparation du triéthylhexynyl-1 silane

En faisant réagir, dans les conditions ci-dessus, le tris(benzènediolato-1,2)silicate de sodium avec 3 équivalents de bromure d'éthylmagnésium et 1 équivalent de bromure d'hexynyl-1-magnésium, on obtient avec un rendement de 49% le triéthylhexynyl-1 silane de formule:

$Et_3\,Si\text{-}C{\equiv}C(CH_2)_3CH_3$ $Eb_{760} = 185\text{–}189\ °C$

Exemple 8

Préparation d'organosilanes de formule $R_4Si$

a) Mode opératoire général

Le complexe de silicium hexacoordiné (10 à 20 mmoles) est mis en suspension dans 50 à 100 ml d'éther anhydre. 4 équivalents d'organométallique sont ajoutés à température ambiante. Le mélange réactionnel est chauffé à reflux pendant 1 à 2 heures. Il est ensuite hydrolysé par 50 ml d'une solution d'$H_2SO_4$ à 25%. Le composé silicié est ensuite isolé de la même manière que précédemment décrit dans l'exemple 4a).

b) Préparation de tétraallylsilane

En faisant réagir, dans les conditions ci-dessus, le tris(benzènediolato-1,2)silicate de sodium avec 4 équivalents de bromure d'allylmagnésium, on obtient avec un rendement de 68% le tétraallylsilane de formule:

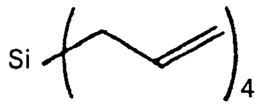

$Eb_{23}$ = 105–112 °C

c) Préparation de tétraphénylsilane

En faisant réagir, dans les conditions ci-dessus, le tris(benzènediolato-1,2)silicate de sodium avec 4 équivalents de bromure de phénylmagnésium, on obtient avec un rendement de 55% le tétraphénylsilane de formule:

$Ph_4Si$ P.F. = 236–237 °C

d) Préparation du 6-silaspiro(5,5)undécane

En faisant réagir, dans les conditions ci-dessus, le tris(benzènediolato-1,2)silicate de sodium avec 2 équivalents de dichlorure de pentyldimagnésium-1,5, on obtient avec un rendement de 40% le 6-silaspiro(5,5)undécane de formule:

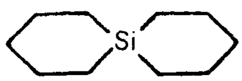

$Eb_{25}$ = 112–120 °C

e) Préparation du tétraphényléthynylsilane

En faisant réagir, dans les conditions ci-dessus, le tris(benzènediolato-1,2)silicate de sodium avec 4 équivalents de chlorure de phyényléthynylmagnésium, on obtient avec un rendement de 73% le tétraphényléthynylsilane de formule

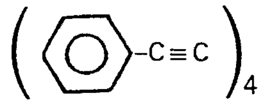

Si P.F. = 193–194 °C

f) Préparation du tétrahexynyl-1 silane

En faisant réagir, dans les conditions ci-dessus, le tris(benzènediolato-1,2)silicate de sodium avec 4 équivalents de chlorure d'hexynyl-1 magnésium, on obtient avec un rendement de 57% le tétrahexynyl-1 silane de formule:

$(BuC\equiv C)_4Si$ $Eb_{0.2}$ = 165–185 °C

Exemple 9

Préparation de $Et_3Si–SiPh_3$

Le mode opératoire est identique à celui décrit à l'exemple 4a). Cependant au lieu d'hydrolyser, une solution de $Ph_3Si^-Li^+$, obtenue par exemple d'après H. GILMAN et G.D. LICHTENWALTER, J. Amer. Chem. Soc., 1958, 80, 608, (1 équivalent) est ajoutée sous azote au milieu réactionnel. Après 2 heures d'agitation à température ambiante, le mélange réactionnel est filtré. La solution éthérée est lavée plusieurs fois à l'eau, puis séchée sur $MgSO_4$. Le produit est recristallisé dans l'alcool à 95°. Rendement 85%, P.F. = 92–93 °C.

Exemple 10

Préparation du triéthylsilane en une seule étape

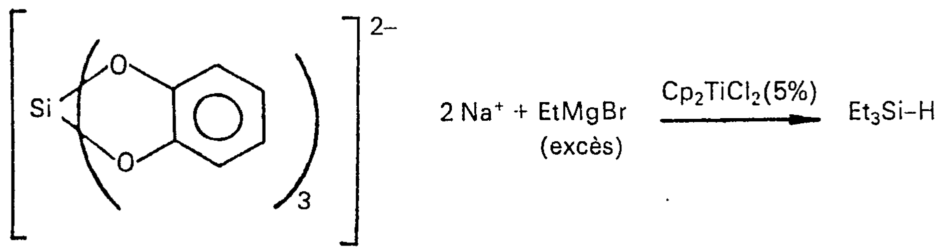


7,96 g de tris(benzènediolato-1,2)silicate de sodium (20 mmoles) et 0,251 g de complexe de titane (1 mmole) sont mis en suspension dans 60 ml d'éther anhydre sous atmosphère d'argon. 100 mmoles de bromure d'éthylmagnésium sont ajoutées goutte à goutte à température ambiante. Le mélange réactionnel est porté à reflux pendant environ 5 heures. On hydrolyse avec HCl 4N. On extrait 4 fois la phase aqueuse à l'éther. La phase organique est lavée à la soude pour éliminer le pyrocatéchol, puis à l'eau jusqu'à neutralité et ensuite séchée sur $SO_4Mg$. 1,13 g de $Et_3Si–H$ est obtenu à la distillation (rendement = 50%) $Eb_{760}$ = 100–107 °C.

## Revendications

1. Complexes de silicium hexacoordinés caractérisés en ce qu'ils répondent à la formule générale I:

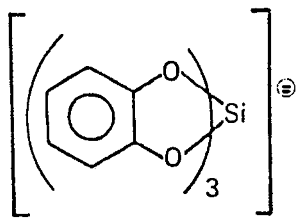

$(n+1)A^{(2-n)\oplus}$ (I)a

dans laquelle:

A représente un métal alcalin ou alcalino-terreux, à l'exception du magnésium, et

n = 0 ou 1.

2. Procédé pour la préparation de complexes de formule générale I, selon la revendication 1, caractérisé en ce qu'ils sont obtenus par réaction de silice ou de silicates minéraux ou organiques avec du pyrocatéchol, en présence d'un alcoolate de métal alcalin ou alcalinoterreux, notamment préparé in situ dans le milieu réactionnel.

3. Procédé selon la revendication 2, caractérisé en ce que la réaction est conduite en milieu solvant, notamment en milieu alcoolique, et sous atmosphère inerte.

4. Application des complexes de formule générale I:

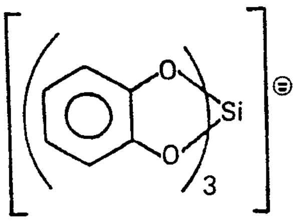

$(n+1)A^{(2-n)\oplus}$ (I)

dans laquelle:

A représente un métal alcalin ou alcalino-terreux, et

n = 0 ou 1, à la préparation d'organosilanes de formule II:

$R_3\,Si{-}R'$ (II)

dans laquelle:

R désigne un radical alcoyle, alcényle, alcynyle, phényle, naphtyle, phénylalcoyle, naphtylalcoyle, phénylalcényle, naphtylalcényle, phénylalcynyle, naphtylalcynyle, alcoylphényle ou alcoylnaphtyle, dans lesquels les fragments aliphatiques sont linéaires ou ramifiés et contiennent de 1 à 20 atomes de carbone,ou encore

un radical Si $R_3''$ où R'' désigne un radical R, et

R' désigne un atome d'hydrogène ou d'halogène, ou encore un radical R, caractérisée en ce que l'on fait réagir un dérivé organométallique avec le complexe de silicium hexacoordiné de formule générale I précité.

5. Application selon la revendication 4, caractérisée en ce que le dérivé organométallique est un organo-alcalin de formule générale III:

R–Alc (III)

dans laquelle:

R a la signification donnée à la revendication 4, et

Alc désigne un métal alcalin.

6. Application selon la revendication 4, caractérisée en ce que le dérivé organométallique est un halogénure d'organomagnésium de formule générale IV:

R–Mg–X (IV),

dans laquelle:

R a la signification donnée à la revendication 4, et

X désigne un atome d'halogène.

7. Application selon la revendication 4, caractérisée en ce que le dérivé organométallique est un organozincique de formule générale V:

$R_2Zn$ (V)

dans laquelle:

R a la signification donnée à la revendication 4.

8. Application selon la revendication 4, caractérisée en ce que le dérivé organométallique est un organobimagnésien de formule générale VI:

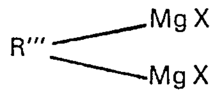

(VI)

dans laquelle:

R''' désigne un radical alcoylène ou alcénylène contenant 3 à 5 atomes de carbone, et

X désigne un atome d'halogène.

9. Application selon l'une des revendications 4 à 8, caractérisée en ce que la réaction est conduite par chauffage au reflux, en milieu solvant anhydre et sous atmosphère inerte.

10. Application selon l'une des revendications 4 à 9, caractérisée en ce que, après réaction de l'organométallique, un agent réducteur est ajouté au milieu, en particulier un hydrure minéral tel que l'aluminohydrure de lithium pour obtenir un hydrogénoorganosilane.

11. Application selon l'une des revendications 4 à 10, caractérisée en ce que la réaction est conduite en présence d'un acide halogénhydrique.

12. Application selon l'une des revendications 4 à 10, caractérisée, en ce que la réaction est conduite en présence d'un second dérivé organométallique de formule générale:

R–Alc, R'–Mg–X, $R'_2Zn$ ou $R'_3Si{-}Li$

où R, R', Alc et X ont les significations données précédemment.

13. Application selon l'une des revendications 4 à 12, caractérisée en ce que la réaction est conduite avec un excès de dérivés organométalliques, en présence de dichlorure de bis(cyclopentadienyl)titane.

**Patentansprüche**

1. Hexakoordinierte Siliciumkomplexe, dadurch gekennzeichnet, dass sie der allgemeinen Formel I entsprechen:

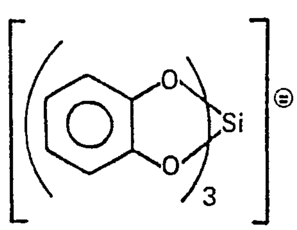

$(n+1)A^{(2-n)\oplus}$ (I)a

worin

A ein Alkali- oder Erdalkalimetall bedeutet, ausgenommen Magnesium, und

n = 0 oder 1 ist.

2. Verfahren zur Herstellung der Komplexe der allgemeinen Formel I nach Anspruch 1, dadurch gekennzeichnet, dass sie erhalten werden durch Reaktion von Silicium oder anorganischen oder

organischen Silikaten mit Brenzcatechin in Gegenwart eines Alkali- oder Erdalkalimetallalkoholats, bevorzugt hergestellt in situ im Reaktionsmedium.

3. Verfahren nach Anspruch 2, dadurch gekennzeichnet, dass die Reaktion in einem Lösungsmittelmedium durchgeführt wird, bevorzugt im alkoholischen Medium, und unter inerter Atmosphäre.

4. Verwendung der Komplexe der allgemeinen Formel I:

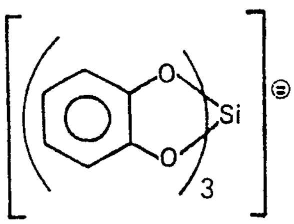

$(n+1)A^{(2-n)\oplus}$ (I)

worin:

A ein Alkali- oder Erdalkalimetall bedeutet, und

n = 0 oder 1 ist, zur Herstellung von Organosilanen der Formel II:

$$R_3Si{-}R' \quad \text{(II)}$$

worin

R einen Alkyl-, Alkenyl-, Alkinyl-, Phenyl-, Naphthyl-, Phenylalkyl, Naphthylalkyl-, Phenylalkenyl-, Naphthylalkenyl-, Phenylalkinyl-, Naphthylalkinyl-, Alkylphenyl- oder Alkylnaphthylrest bedeutet, worin die aliphatischen Reste geradkettig oder verzweigt sind und 1 bis 20 Kohlenstoffatome enthalten, oder noch einen Rest Si $R_3''$, worin R'' einen Rest R bedeutet, und

R' ein Wasserstoff- oder Halogenatom bedeutet, oder noch einen Rest R, dadurch gekennzeichnet, dass man ein Organometallderivat mit dem hexakoordinierten Siliciumkomplex der zuvor genannten allgemeinen Formel I reagieren lässt.

5. Verwendung nach Anspruch 4, dadurch gekennzeichnet, dass das Organometallderivat eine Organoalkaliverbindung der allgemeinen Formel III ist:

$$R{-}Alc \quad \text{(III)}$$

worin:

R die in Anspruch 4 angegebene Bedeutung hat, und

Alc ein Alkalimetall bedeutet.

6. Verwendung nach Anspruch 4, dadurch gekennzeichnet, dass das Organometallderivat ein Organomagnesiumhalogenid der allgemeinen Formel IV ist:

$$R{-}Mg{-}X \quad \text{(IV)}$$

worin:

R die in Anspruch 4 angegebene Bedeutung hat, und

X ein Halogenatom bedeutet.

7. Verwendung nach Anspruch 4, dadurch gekennzeichnet, dass das Organometallderivat eine Organozinkverbindung der allgemeinen Formel V ist:

$$R_2Zn \quad \text{(V)}$$

worin:

R die in Anspruch 4 angegebene Bedeutung hat.

8. Verwendung nach Anspruch 4, dadurch gekennzeichnet, dass das Organometallderivat ein Organobimagnesiumderivat der allgemeinen Formel VI ist:

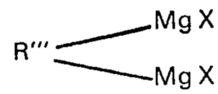

(VI)

worin:

R''' einen Alkylen- oder Alkenylenrest mit 3 bis 5 Kohlenstoffatomen bedeutet, und

X ein Halogenatom bedeutet.

9. Verwendung nach einem der Ansprüche 4 bis 8, dadurch gekennzeichnet, dass die Reaktion durch Erhitzen unter Rückfluss in einem wasserfreien Lösungsmittelmilieu und unter inerter Atmosphäre durchgeführt wird.

10. Verwendung nach einem der Ansprüche 4 bis 9, dadurch gekennzeichnet, dass nach der Reaktion des Organometallderivats ein Reduktionsmittel dem Medium hinzugefügt wird, insbesondere ein anorganisches Hydrid wie Lithiumaluminiumhydrid, wobei ein hydriertes Organosilan erhalten wird.

11. Verwendung nach einem der Ansprüche 4 bis 10, dadurch gekennzeichnet, dass die Reaktion in Gegenwart einer Halogenwasserstoffsäure durchgeführt wird.

12. Verwendung nach einem der Ansprüche 4 bis 10, dadurch gekennzeichnet, dass die Reaktion in Gegenwart eines zweiten Organometallderivats der allgemeinen Formel:

$$R{-}Alc,\ R'{-}Mg{-}X,\ R'_2Zn \text{ ou } R'_3Si{-}Li$$

durchgeführt wird, worin R, R', Alc und X die zuvor genannten Bedeutungen haben.

13. Verwendung nach einem der Ansprüche 4 bis 12, dadurch gekennzeichnet, dass die Reaktion mit einem Überschuss der Organometallderivate durchgeführt wird in Gegenwart von Bis-(Cyclopentadienyl)titandichlorid.

## Claims

1. Hexacoordinated silicon complexes characterised in that they satisfy the general formula I:

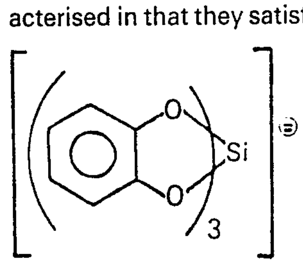

$(n+1)A^{(2-n)\oplus}$ (I)a

2. Process for the preparation of complexes of the general formula I, according to claim 1, characterised in that they are obtained by reaction of silica or of mineral or organic silicates with pyrocatechol in the presence of an alcoholate of an alkali metal or an alkaline-earth metal, more particularly prepared in situ in the reaction medium.

3. A process according to claim 2, characterised in that the reaction is carried out in a solvent medium, more particularly in an alcoholic medium, and in an inert atmosphere.

4. Application of the complexes of the general formula I:

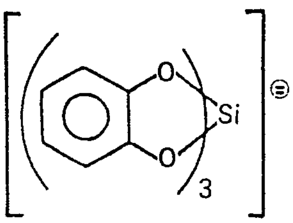 $(n+1)A^{(2-n)\oplus}$ (I)

wherein:

A denotes an alkali metal or an alkaline-earth metal and

n = 0 or 1

to the preparation of organosilates of formula II:

$R_3Si{-}R'$ (II)

wherein:

R denotes an alkyl, alkenyl, alkynyl, phenyl, naphthyl, phenylalkyl, naphthylalkyl, phenylalkenyl, naphthylalkenyl, phenylalkynyl, naphthylalkynyl, alkylphenyl or alkylnaphthyl radical, in which the aliphatic fragments are linear or branched and contain from 1 to 20 carbon atoms, or alternatively a radical Si $R_3''$ where R'' denotes a radical R and

R' denotes a hydrogen or halogen atom or alternatively a radical R,

characterised in that an organometallic derivative is reacted with the hexacoordinated silicon complex of the general formula I aforesaid.

5. Application according to claim 4, characterised in that the organometallic derivative is an organo-alkali metal of the general formula III:

R–Alc (III)

wherein:

R has the meaning given in claim 4, and

Alc denotes an alkali metal.

6. Application according to claim 4, characterised in that the organometallic derivative is an organomagnesium halide of the general formula IV:

R–Mg–X (IV)

wherein:

R has the meaning given in claim 4 and

X denotes a halogen atom.

7. Application according to claim 4, characterised in that the organometallic derivative is an organozinc of the general formula V:

$R_2Zn$ (V)

wherein:

R has the meaning given in claim 4.

8. Application according to claim 4, characterised in that the organometallic derivative is an organodimagnesium of the general formula VI:

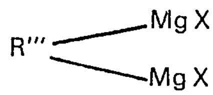 (VI)

wherein:

R''' denotes an alkylene or alkenylene radical containing from 3 to 5 carbon atoms and

X denotes a halogen atom.

9. Application according to any one of claims 4 to 8, characterised in that the reaction is carried out by heating with reflux in an anhydrous solvent medium and in an inert atmosphere.

10. Application according to any one of claims 4 to 9, characterised in that after reaction of the organometal a reducing agent is added to the medium, more particularly a mineral hydride such as lithium aluminohydride in order to obtain a hydrogenoorganosilane.

11. Application according to any one of claims 4 to 10, characterised in that the reaction is carried out in the presence of a halohydric acid.

12. Application according to any one of claims 4 to 10, characterised in that reaction is carried out in the presence of a second organometallic derivative of the general formula:

R–Alc, R'–Mg–X, $R_2'Zn$ or $R_3'$ Si–Li

where R, R', Alc and X have the meanings given hereinbefore.

13. Application according to any one of claims 4 to 12, characterised in that the reaction is carried out with an excess of organometallic derivatives in the presence of bis(cyclopentadienyl)titanium dichloride.